# EUROPEAN PATENT APPLICATION

(11) **EP 3 435 319 A1**
(43) Date of publication of application: **30.01.2019**
(21) Application number: 17770139.8
(22) Date of filing: 17.03.2017
(51) Int. Cl.: G06Q 50/02, A01D 41/127

(54) **INFORMATION PROCESSING DEVICE, CONTROL METHOD FOR INFORMATION PROCESSING DEVICE, AND RECORDING MEDIUM HAVING CONTROL PROGRAM FOR INFORMATION PROCESSING DEVICE RECORDED THEREIN**

(30) Priority: 25.03.2016 JP 2016061458
(71) Applicant: NEC Corporation, Tokyo 108-8001 (JP)
(72) Inventor: SAKAGUCHI Masami, Tokyo 108-8001 (JP); ISHIDA Kousuke, Tokyo 108-8001 (JP); AKIMOTO Shunsuke, Tokyo 108-8001 (JP); MATSUMOTO Shintaro, Tokyo 108-8001 (JP); OOMINATO Shinji, Tokyo 108-8001 (JP)
(74) Representative: Betten & Resch
(86) International application number: PCT/JP2017/010835
(87) International publication number: WO 2017/164097

(57) **Abstract**

In order to be capable of efficiently controlling harvesting processing of crops in conjunction with the harvesting season and harvesting volume, an information processing device has: an information generation unit that generates first harvesting schedule information for crops, including harvesting season information and harvesting volume information, on the basis of field information including at least one out of weather information, soil information, crop information, crop growth information, and agribusiness history information for a field; and a plan generation unit that generates a harvesting processing plan including at least one plan out of a harvesting plan, transportation plan, and processing plan for the field, on the basis of the first harvesting schedule information.

## Description

### [Technical Field]

The present invention relates to an information processing device, a control method of an information processing device, a control program of an information processing device, and so on.

### [Background Art]

In the technical field described above, PTL 1 discloses a technique in which a remote vehicle allocation server determines a ranking of requirements for vehicle allocation based on positional information about a plurality of harvesters, a predicted time when a storage tank is fully filled, and a harvest end time in each field. The technique thereby effectively controls the allocation of transport vehicles. Further, PTL 2 discloses a technique for selecting a transportation destination of each transport vehicle for transporting a harvest based on a type of the harvest, processing ability, and an acceptable volume of the harvest in the plurality of preparation facilities in a management center for managing a plurality of preparation facilities for preparing the harvest. PTL 3 discloses a field observer for measuring a predetermined physical volume included in soil of a field, and transmitting the measured physical volume to a device. PTL 4 discloses a farming support system that offers a progress of farm work in the field based on a work schedule for farm work set for each field and performance information indicating whether or not the farm work is completed.

### [Citation List]

### [Patent Literature]

PTL 1: Japanese Unexamined Patent Application Publication No. 2015-084667
PTL 2: Japanese Unexamined Patent Application Publication No. 2008-228630
PTL 3: International Publication WO 2015/115078
PTL 4: Japanese Unexamined Patent Application Publication No. 2015-049871

### [Summary of Invention]

### [Technical Problem]

However, in the techniques described in the above literatures, transportation control is based on the volume of a harvested crop. Therefore, the techniques have a difficulty in improving efficiency of work from harvesting of a crop to collection and a process of the crop.

An object of the present invention is to provide a technique for solving at least one of the above-described problems.

### [Solution to Problem]

In order to achieve the above-described objectives, an information processing device according to the present invention including:
information generation means for generating first harvest schedule information for a crop based on field information including at least one of weather information, soil information, crop information, crop growth information and farming history information of a field, the first harvest schedule information including harvest timing information and harvest volume information; and
scheduling means for generating a harvest processing schedule including at least one of a harvest schedule for the field, a logistic schedule, and a process schedule based on the generated first harvest schedule information.

In order to achieve the above-described objectives, a control method of an information processing device according to the present invention, the control method including:
generating first harvest schedule information for a crop based on field information including at least one of weather information, soil information, crop information, crop growth information and farming history information of a field, the first harvest schedule information including harvest timing information and harvest volume information; and
generating a harvest processing schedule including at least one of a harvest schedule for the field, a logistic schedule, and a process schedule based on the generated first harvest schedule information.

In order to achieve the above-described objectives, a control program of an information processing device according to the present invention, the program causing a computer to achieve:
an information generation function for generating first harvest schedule information for a crop based on field information including at least one of weather information, soil information, crop information, crop growth information and farming history information of a field, the first harvest schedule information including harvest timing information and harvest volume information; and
a scheduling function for generating a harvest processing schedule including at least one of a harvest schedule for the field, a logistic schedule, and a process schedule based on the generated first harvest schedule information.

### [Advantageous effects of Invention]

According to the present invention, it is possible to improve efficiency of work from harvesting of a crop to collection and a process of the crop.

### [Brief Description of Drawings]

Fig. 1 is a block diagram illustrating a configuration of an information processing device according to a first example embodiment of the present invention.
Fig. 2 is a diagram illustrating an outline of underlying technology for an information processing device according to a second example embodiment of the present invention.
Fig. 3A is a diagram illustrating a configuration of the information processing device according to the second example embodiment of the present invention.
Fig. 3B is a diagram illustrating an example of an image to be shown by a display control unit in the information processing device according to the second example embodiment of the present invention.
Fig. 3C is a diagram illustrating another example of an image to be shown by a display control unit in the information processing device according to the second example embodiment of the present invention.
Fig. 3D is a diagram illustrating another example of an image to be shown by a display control unit in the information processing device according to the second example embodiment of the present invention.
Fig. 3E is a diagram illustrating another example of an image to be shown by a display control unit in the information processing device according to the second example embodiment of the present invention.
Fig. 4A is a diagram illustrating an example of field information in the information processing device according to the second example embodiment of the present invention.
Fig. 4B is a diagram illustrating an example of harvest schedule information in the information processing device according to the second example embodiment of the present invention.
Fig. 4C is a diagram illustrating an example of farming support information in the information processing device according to the second example embodiment of the present invention.
Fig. 4D is a diagram illustrating an example of harvest processing schedule in the information processing device according to the second example embodiment of the present invention.
Fig. 5 is a block diagram illustrating a hardware configuration of the information processing device according to the second example embodiment of the present invention.
Fig. 6 is a flowchart illustrating a processing procedure in the information processing device according to the second example embodiment of the present invention.
Fig. 7 is a diagram illustrating a configuration of an information processing system according to a third example embodiment of the present invention.
Fig. 8A is a diagram illustrating an example of a display image shown on a communication terminal of a farm house or a communication terminal of a processing factory in the information processing system according to a third example embodiment of the present invention.
Fig. 8B is a diagram illustrating an example of a simulation screen for a planting schedule in the information processing system according to a third example embodiment of the present invention.

### [Example Embodiment]

Examples of carrying out the present invention will be described in detail below by way of example with reference to the drawings. However, configurations, values, processing flows, functional elements, and the like described in the following example embodiments are merely examples, and modifications or changes thereof can be arbitrarily made. The technical scope of the present invention is not intended to be limited to the following descriptions.

### [First example embodiment]

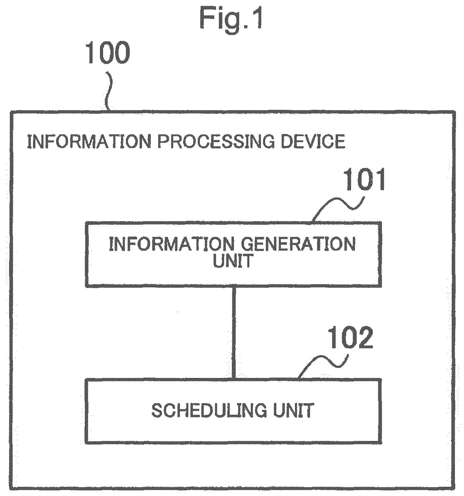

An information processing device 100 as a first example embodiment of the present invention will be described with reference to Fig. 1. The information processing device 100 is a device that generates a harvest processing schedule based on harvest schedule information for a crop. As illustrated in Fig. 1, the information processing device 100 includes an information generation unit (information generator) 101 and a scheduling unit (scheduler) 102.

The information generation unit 101 generates harvest schedule information (hereinafter referred to as "first harvest schedule information") including harvest timing information and harvest volume information about a crop to be harvested in a field based on field information including at least one of weather information, soil information, crop information, crop growth information, and farming history information about the field. The information generation unit 101 generates a virtual field on a computer based on, for example, the field information, performs a growth simulation using a crop growth model in this virtual field, and, thereby, generates harvest schedule information. Further, the information generation unit 101 plots, for example, a daily schedule harvest volume, and generates harvest schedule information by using a linear approximation. The term "crop" refers to a crop of a predetermined species, or a crop of a species belonging to a predetermined group.

The weather information is information about weather in an area including a target field. The weather information is information about short-range, middle-range, and long-range weather forecasts and the like based on data obtained by using a meteorological equipment, a weather satellite, an unmanned or manned aircraft, a balloon, or the like. The weather information includes a daily maximum temperature, a daily minimum temperature, insolation, an amount of precipitation, humidity, airflow, wind direction, and the like. However, the weather information is not limited to these.

The soil information is information about soil of the target field. The soil information includes chemical soil component information, physical soil component information, information indicating whether or not drainage is excellent, topographical information for the target field, and the like. However, the soil information is not limited to these. The soil information may be information based on output data from various sensors installed at each field, or information based on data input by a worker or a manager of each field.

The crop information is information about a crop. The crop information includes phenology information, such as a time from germination to blossoming of a crop growth information such as a solar time dependence on a growth rate when nutrition (nutrient) and water are appropriately provided, and information about a volume of nitrogen that can be taken over a volume of water that can be taken.

The crop growth information is information about a growth status (growth state) of a crop being grown in the target field. The crop growth information is information about a growth status indicating that, for example, the crop has just come out, the crop has come to fruition, or the like. However, the crop growth information is not limited to these.

The crop information and crop growth information may be information based on data owned by a cooperative society or the like in a region including a field. In other words, the crop information and crop growth information that can be particularly observed in a predetermined region may be associated with the region.

The farming history information is information about farm work carried out in the past in the target field, and includes information about a fertilization timing and a fertilization volume in the past in the target field, information about an irrigation timing and an irrigation volume in the past in the target field, and the like.

The scheduling unit 102 generates a harvest processing schedule including at least one of a harvest schedule for the target field, a transportation schedule, and a process schedule based on the harvest schedule information generated by the information generation unit 101.

The harvest timing information included in the harvest schedule information is information about a harvest timing of a crop being grown in the target field. The harvest volume information is information about a volume capable of harvesting of a crop being grown in the target field. The harvest timing information indicates, for example, a scheduled date and time of a harvest. The harvest volume information is, for example, a scheduled harvest weight of a crop that is scheduled to be harvested.

A harvest schedule for a field is a preparation schedule for a harvester and man-power regarding the harvest schedule information. The harvest schedule for a field is a schedule for, for example, the number of harvesters to be used, and the number of workers who engage in harvesting of a crop.

A transportation schedule is a schedule for transportation of a harvest from a field to a process factory regarding harvest schedule information and a process volume (processing volume) of the process factory. The process factory described herein refers to a factory for a process of a crop harvested in a field. The transportation schedule for a harvest is a schedule for the number of transportation means, a timing of arranging the number of transportation means, and the like. The number and the timing are required for balancing, for example, the crop harvest volume and the process volume in the process factory. In this case, examples of the transportation means include a truck, a train, a ship, and an airplane. However, the transportation means are not limited to these.

A process schedule is an operation schedule for the process factory corresponding to the harvest schedule information. The process schedule of a harvest is a schedule for, for example, at which timing the harvest is processed and which lines are operated to process the harvest.

According to the present example embodiment, it is possible to improve efficiency of work from harvesting of a crop to collection and a process of the crop.

In the above description, the scheduling unit 102 generates a harvest processing schedule, i.e., a schedule for a crop harvest stage. However, the harvest processing schedule is not limited to this. The scheduling unit 102 may generate a schedule for a crop growth stage. The schedule for the crop growth stage is, for example, a schedule for preparing equipment (a tractor or a crop-dusting plane) and man-power in the crop growth stage. The scheduling unit 102 can also generate a schedule for using irrigation facilities in a field, a schedule for using a field, a schedule for purchasing seeds, seedlings, and fertilizer, and a schedule for agricultural investment.

### [Second example embodiment]

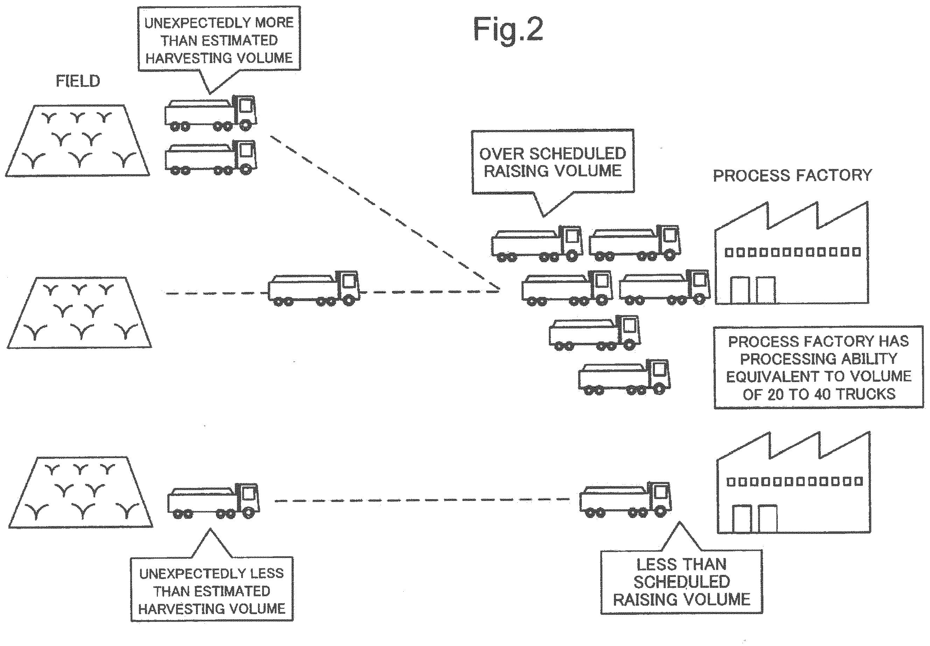

Next, an information processing device according to a second example embodiment of the present invention will be described by using Figs. 2 to 6. Fig. 2 is a diagram illustrating an outline of underlying technology for the information processing device according to the present example embodiment.

Each process factory arranges trucks for transporting a harvested crop, and designs an operation schedule for lines in the factory in accordance with the type and harvest volume of a crop harvested in each field. However, if each process factory arranges trucks or designs the operation schedule for lines after harvesting a crop, these processes are delayed. As a result of not considering circumstances of the side that receives the harvest in this way, for example, when the crop harvest volume is larger than an estimated volume, reception of the transported harvest is retained. When the retained harvest state deteriorates, deterioration in utilization rate of a harvest occurs.

On the contrary, when the crop harvest volume is smaller than the estimated volume, the volume of the harvest to be transported to each process factory is small. As a result, the number of lines operable in the factory, the capacity of the factory, and the number of trucks are excessively large and labor expenses are wasted. Specifically, each process factory has a difficulty in recognizing schedules for the harvest timing and harvest volume of a crop. The difficulty results in deterioration in utilization rate of the harvest and a waste of the operation status in the factory.

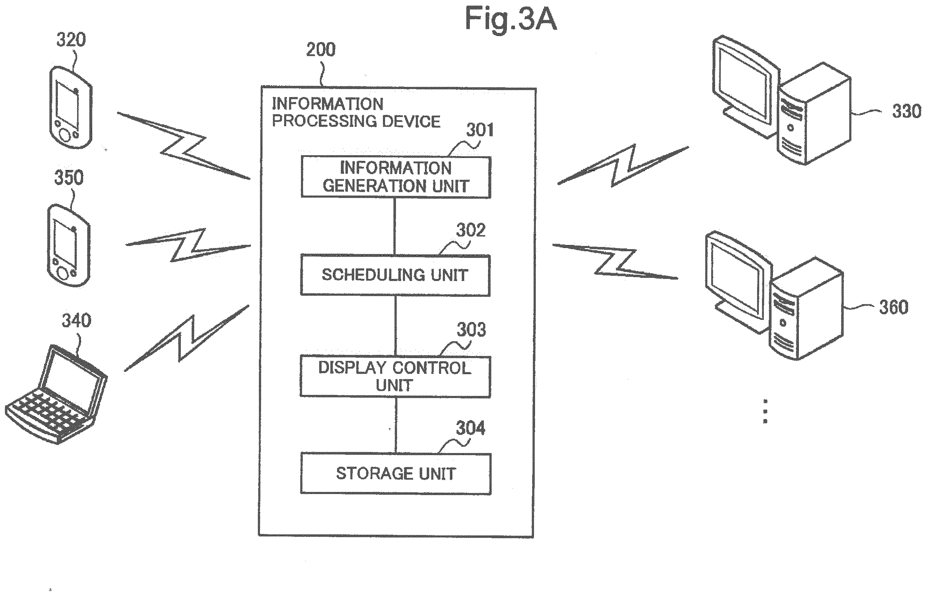

Referring to Fig. 3A, an information processing device 200 provides a farm house with farming support information in order to enable growth and harvesting of a crop on schedule. Further, the information processing device 200 generates a harvest processing schedule for operating a process factory and the like on schedule based on the farming support information and effectively controls crop harvest processing.

Fig. 3A is a diagram illustrating a configuration of the information processing device 200 according to the present example embodiment, and a communication terminal 320, a terminal 330, a terminal 340, a communication terminal 350, and a terminal 360, which are capable of communicating with the information processing device 200. The information processing device 200 includes an information generation unit (information generator) 301, a scheduling unit (scheduler) 302, a display control unit (display controller) 303, and a storage unit 304. Examples of the terminal capable of communicating with the information processing device 200 (hereinafter referred to as a communication terminal) include the communication terminal 320 used by a worker of a field, the terminal 330 in a farm house, the terminal 340 in a transportation company, the communication terminal 350 on a transport vehicle, and the terminal 360 in a process factory.

The information generation unit 301 generates farming support information about farm work performed in each field based on field information stored in the storage unit 304 to be described below. The information generation unit 301 stores the generated farming support information in the storage unit 304 to be described later. In this case, the field information includes, for example, weather information, soil information, crop information, crop growth information, farming history information, and the like. However, the field information is not limited to these. Weather information, soil information, crop information, crop growth information, and farming history information are the same as those described in the first example embodiment.

The farming support information is information for supporting farm work or farming in a target field. The farming support information includes harvest schedule information. The harvest schedule information indicates an example in which harvest schedule information (i.e., "first harvest schedule information") according to the first example embodiment is implemented. The farming support information also includes planting timing information, fertilization timing information, fertilizer volume information, irrigation timing information, and irrigation volume information. However, the farming support information is not limited to this. The planting timing information is information indicating a planting date in a field. The fertilization timing information is information about a timing of fertilizing a target field. The fertilizer volume information is information about a volume of fertilizing the field. The irrigation timing information is information about a timing of supplying water to the field. The irrigation volume information is information about a volume of water to be supplied to the field.

The information generation unit 301 generates a virtual field on a computer based on, for example, the field information, and generates farming support information by performing a growth simulation in accordance with a crop growth model in this virtual field. Further, the harvest schedule information can also be generated by, for example, plotting a daily scheduled harvest volume and using a linear approximation. The farming support information may be updated, for example, each day.

The scheduling unit 302 generates a harvest processing schedule based on the harvest schedule information or farming support information stored in the storage unit 304 to be described later.

The harvest processing schedule includes at least one of a harvest schedule for a field, a transportation schedule for a harvest, and a process schedule for a harvest. The harvest schedule for a field, the transportation schedule for a harvest, and the process schedule for a harvest are the same as those described in the first example embodiment.

As a result of everyday farming in the target field, the harvest timing and harvest volume, which are used when a harvest processing schedule is generated at a certain time in the past, may be different from the harvest timing and harvest volume estimated at the present time. In this case, the scheduling unit 302 revises (changes) the harvest processing schedule according to the harvest timing and harvest volume estimated at the present time. In other words, the scheduling unit 302 can generate a harvest processing schedule that matches the actual harvest timing and harvest volume.

The display control unit 303 reads the farming support information from the storage unit 304 and generates screen information about display of the farming support information. The screen information is transmitted to the communication terminal 320 used by a worker of a field, or the terminal 330 in a farm house through a communication unit (not illustrated) in the information processing device 200. A display unit (not illustrated) of the communication terminal 320 or the terminal 330 shows the farming support information based on the screen information received from the information processing device 200. The display control unit 303 further generates screen information indicating a screen to show the harvest processing schedule generated by the scheduling unit 302. The screen information is transmitted to at least one of the communication terminal 320 used by a worker of a field, the terminal 330 in a farm house, the terminal 340 in a transportation company, the communication terminal 350 on a transport vehicle, and the terminal 360 in a process factory through the communication unit (not illustrated) in the information processing device 200. The display unit (not illustrated) in the communication terminal 320, the terminal 330, the terminal 340, the communication terminal 350, or the terminal 360 shows the harvest processing schedule based on the screen information received from the information processing device 200.

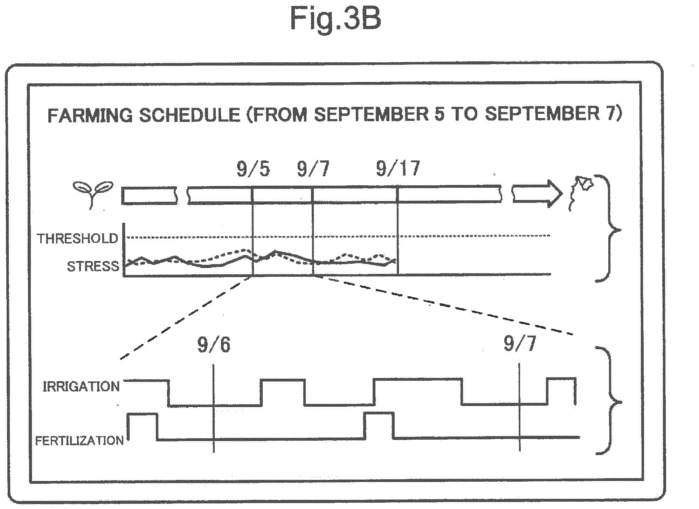

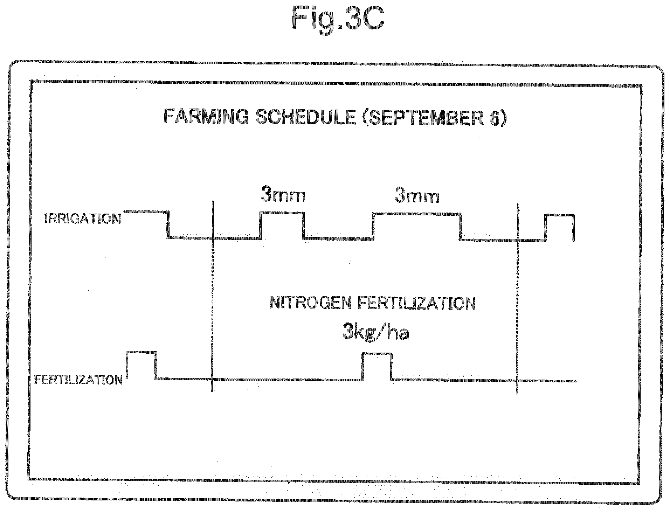

Figs. 3B to 3E are diagrams each illustrating an example of an image to be shown on the display unit of at least one of the communication terminal 320, the terminal 330, the terminal 340, the communication terminal 350, and the terminal 360 based on the screen information generated by the display control unit 303 in the information processing device 200 according to the present example embodiment. Figs. 3B and 3C each illustrate an example of an image to be shown on the communication terminal 320 used by a worker of a field, or the terminal 330 in a farm house. Fig. 3B illustrates a farming schedule for a certain field (e.g., a weekly farming schedule, or a farming schedule in the near future). Fig. 3C illustrates a schedule for an irrigation time, irrigation volume, a fertilization time, and fertilization volume in one day in a certain field. In Fig. 3C, a lateral direction represents time, and time is later toward the right side. Further, the display control unit 303 may generate the screen information indicating a schedule from planting to harvest in a field, or may generate screen information indicating, in chronological order, a work procedure from the start of a work to be carried out on the day to the end of the work. Further, the display control unit 303 may generate screen information indicating a history of past farming.

The display control unit 303 can generate screen information indicating, for example, when a crop will be harvested, in which field the crop will be harvested, or how much crop will be harvested, or screen information indicating a vehicle allocation schedule for transport vehicles (e.g., trucks) and the like owned by a transportation company.

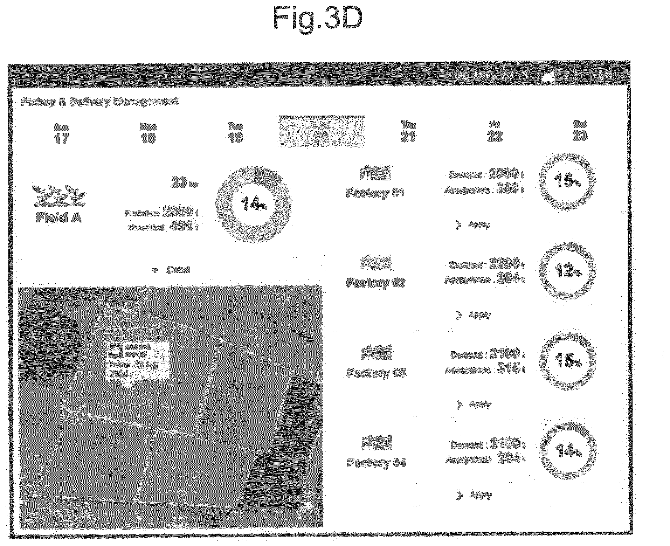

The screen information illustrated in Fig. 3D is shown on, for example, the communication terminal 320 used by a worker of a field, or the terminal 330 in a farm house. A left side of Fig. 3D indicates that a field A harvested 400 tones (hereinafter referred to as "t") in the harvest schedule volume of 2900 t in the entire field on May 20, 2015. A right side of Fig. 3D indicates a status of receiving the harvest by each process factory. In this case, for example, a farm house can select a process factory that can receive the harvest in consideration of a reception status of each of process factories (Factory 01 to Factory 04), and can require the process factory for collecting the harvest. Also, for the remaining harvest schedule volume of 2500 t, the farm house can select a process factory in consideration of the reception status of each process factory, and can require the process factory for collecting the harvest.

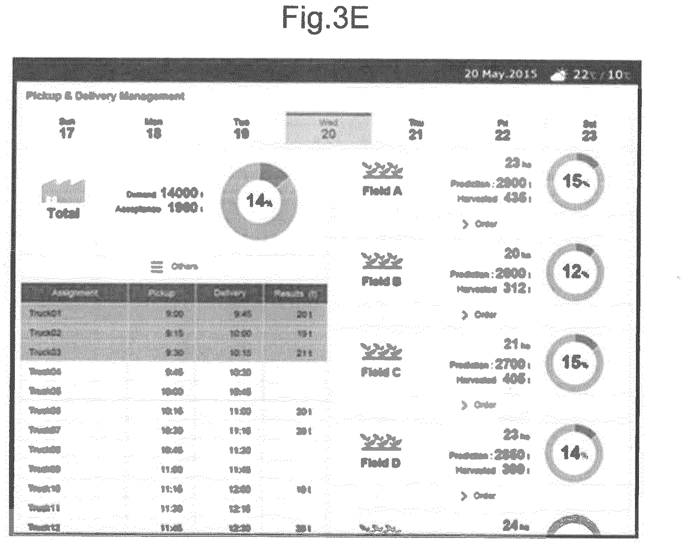

The screen (screen information) illustrated in Fig. 3E is shown on, for example, the terminal 360 in the process factory. Fig. 3E illustrates that 1960 t in the total volume of 14000 t of the harvest that can be received by the process factory have been received (or is scheduled to be received) on May 20, 2015, and also shows a status of each field. Referring to the screen, the process factory can select a target field for which the harvest is received in consideration of the harvest-reception status of the process factory, harvest volumes, and harvest schedule volumes (displayed on the right side of the screen) in a plurality of fields. A lower left side of Fig. 3E illustrates a status of arrangement for a truck to transport the harvest.

Further, the display control unit 303 may generate screen information indicating, for example, the harvest (crop) for a certain truck to be transported the next day, a route guide for the truck to reach a field to receive the harvest (crop), and the like. The route guide to the field may be shown on the terminal 340 in a transportation company, or the communication terminal 350 in a transport vehicle (e.g., a truck).

The storage unit 304 stores field information 401, harvest schedule information 402 for a crop, farming support information 403, and a harvest processing schedule 404.

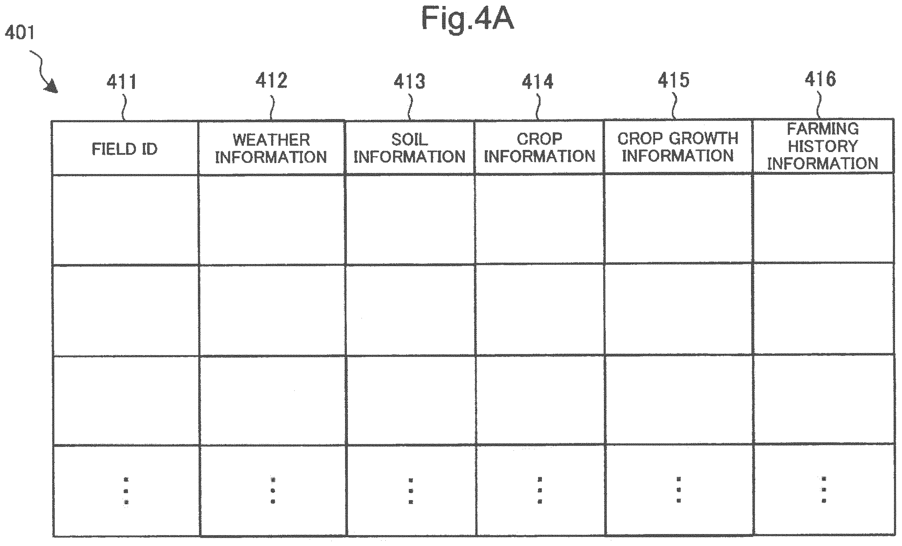

Fig. 4A is a diagram illustrating an example of the field information 401. The storage unit 304 stores weather information 412, soil information 413, crop information 414, crop growth information 415, and farming history information 416 in association with a field identifier (ID) 411. The field ID 411 is an identifier capable of uniquely identifying each field. The weather information 412, the soil information 413, the crop information 414, the crop growth information 415, and the farming history information 416 are similar to those described in the first example embodiment.

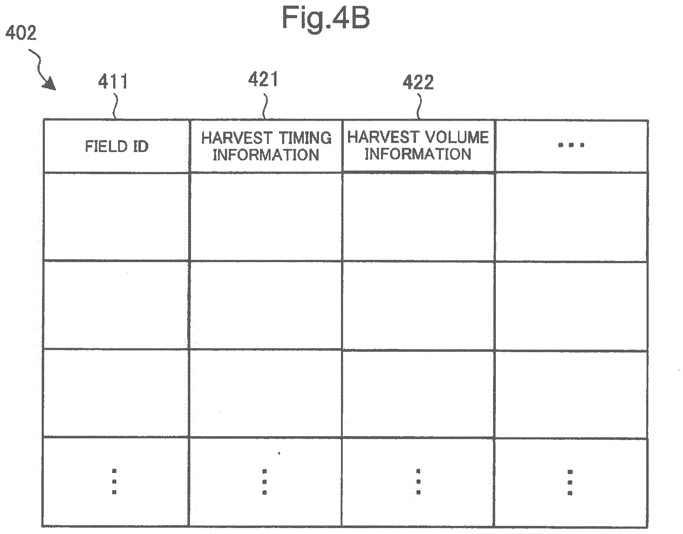

Fig. 4B is a diagram illustrating an example of the harvest schedule information 402. The storage unit 304 stores harvest timing information 421 and harvest volume information 422 in association with the field ID 411. The harvest timing information 421 and the harvest volume information 422 are similar to those described in the first example embodiment.

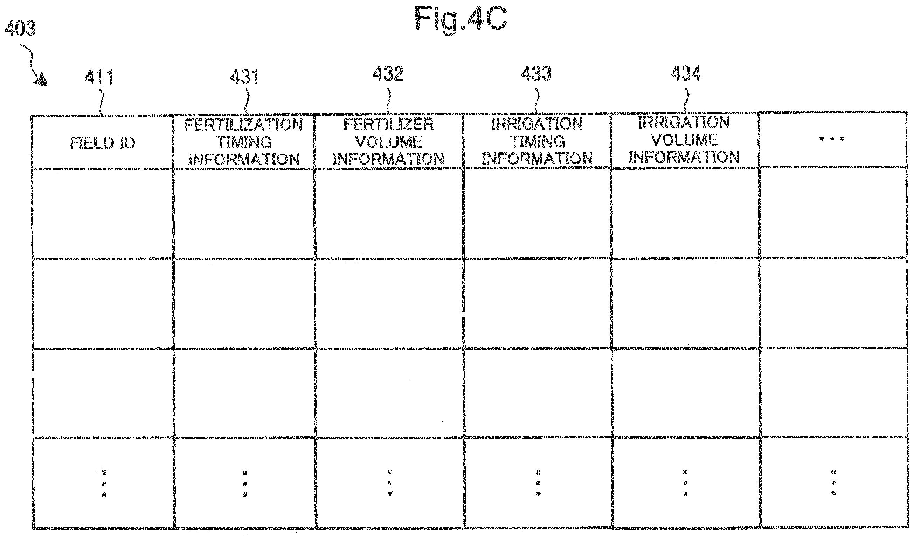

Fig. 4C is a diagram illustrating an example of the farming support information 403. The storage unit 304 stores fertilization timing information 431, fertilizer volume information 432, irrigation timing information 433, and irrigation volume information 434 in association with the field ID 411. The fertilization timing information 431, the fertilizer volume information 432, the irrigation timing information 433, and the irrigation volume information 434 are the same as those described above. The farming support information 403 may include the harvest schedule information 402,

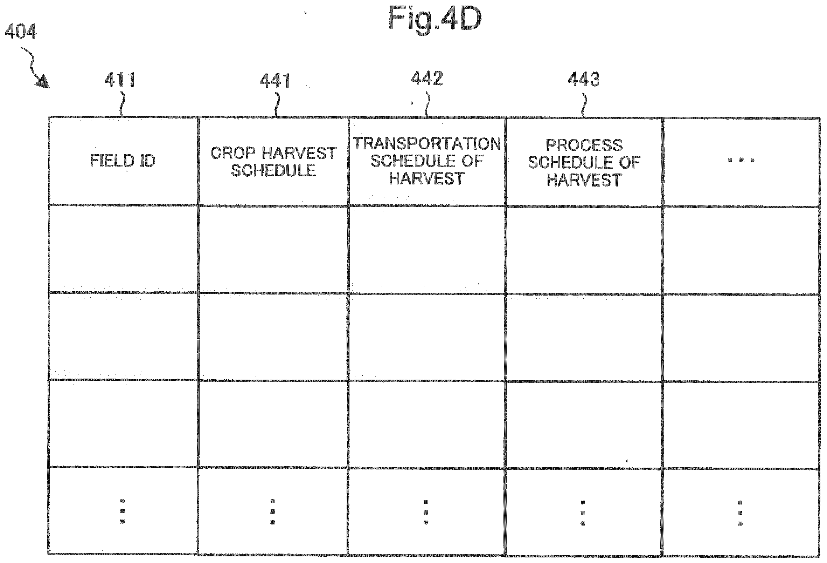

Fig. 4D is a diagram illustrating an example of the harvest processing schedule 404. The storage unit 304 stores a harvest schedule 441 for a crop, a transportation schedule 442 for a harvested crop (harvest), and a process schedule 443 for the harvest in association with the field ID 411. The harvest schedule 441 for a crop, the transportation schedule 442 for a harvested crop (harvest), and the process schedule 443 for the harvest are similar to those described in the first example embodiment.

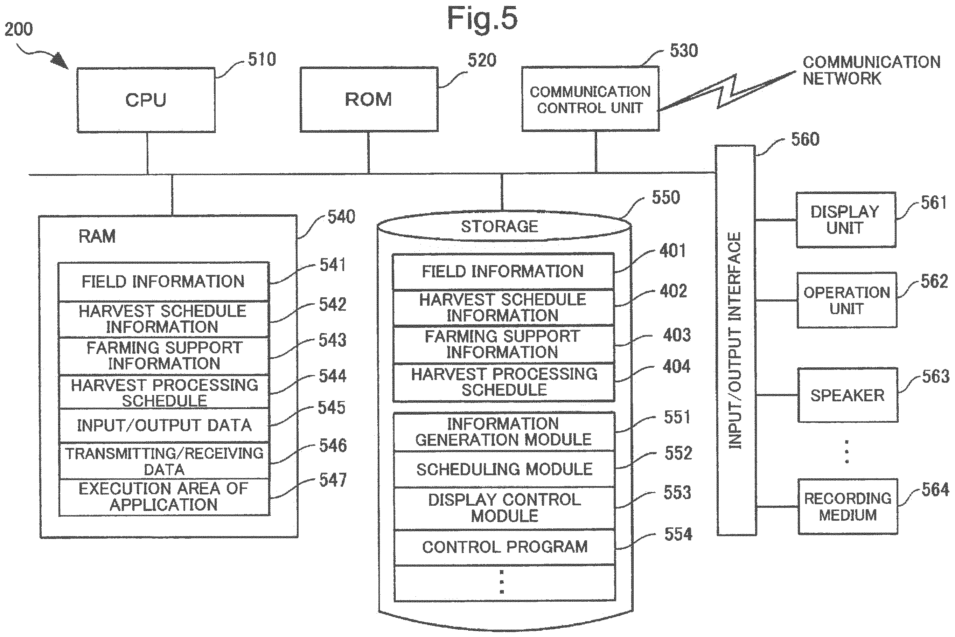

Fig. 5 is a block diagram illustrating a hardware configuration of the information processing device 200 according to the present example embodiment.

A central processing unit (CPU) 510 is a processor that controls calculations and achieves a functional configuration unit of the information processing device 200 illustrated in Fig. 3A by executing a program. A Read Only Memory (ROM) 520 stores fixed data, such as initial data and programs, and other programs. Further, a communication control unit (communication controller) 530 communicates with other devices and the like via a communication network. The number of the CPUs 510 is not limited to one than one. The CPUs 510 may include a Graphics Processing Unit (GPU) for executing image processing. Further, it is desirable that the communication control unit 530 include a CPU separately from the CPU 510, and write or read transmitting/receiving data 546 into or from a Random Access Memory (RAM) 540. Further, it is desirable that a Direct Memory Access Controller (DMAC) (not illustrated) for transferring data between the RAM 540 and a storage 550 be provided. Furthermore, it is desirable that an input/output interface 560 include a CPU separately from the CPU 510, and write or read input/output data 545 into or from an area of the RAM 540. Accordingly, the CPU 510 recognizes that data are received by or transferred to the RAM 540 and performs processing of the data. Further, the CPU 510 prepares the processing result in the RAM 540, and requires the communication control unit 530, the DMAC, or the input/output interface 560 for transmission (or transfer) processing of the processing result.

The RAM 540 is a random access memory used for the CPU 510 as a temporary storage work area. In the RAM 540, a storage area for storing data required for achieving the present example embodiment is secured. Field information 541 is information about a field and includes data such as the field ID 411, for example. This data are data loaded from the field information 401 illustrated in Fig. 4A. Harvest schedule information 542 is information about a harvest schedule for a crop grown in the field. This data are data loaded from the harvest schedule information 402 illustrated in Fig. 4B. Farming support information 543 is information about work or the like required for farming in a field, and that for supporting a farm house who engages in farming in the field. This data are data loaded from the farming support information 403 illustrated in Fig. 4C. Harvest processing schedule 544 is information about the harvest of a crop grown in a field, or information indicating how to perform processing of the harvested crop. This data are data loaded from the harvest processing schedule 404 illustrated in Fig. 4D.

The storage 550 constitutes the storage unit 304 (Fig. 3A). The storage 550 stores a database, various parameters, or the following data or programs required for achieving the present example embodiment. The storage 550 stores the field information 401, the harvest schedule information 402, the farming support information 403, and the harvest processing schedule 404. The field information 401 is information in which the field ID 411, the weather information 412, and the like are associated with each other as illustrated in Fig. 4A. The harvest schedule information 402 is information in which the field ID 411, the harvest timing information 421, and the like are associated with each other as illustrated in Fig. 4B. The farming support information 403 is information in which the field ID 411, the fertilization timing information 431, and the like are associated with each other as illustrated in Fig. 4C. The harvest processing schedule 404 is information in which the field ID 411, the harvest schedule 441 for a crop, and the like are associated with each other as illustrated in Fig. 4D.

The storage 550 further stores an information generation module 551, a scheduling module 552, and a display control module 553. The information generation module 551 is a module that generates farming support information for a field based on the field information and the harvest schedule information. The scheduling module 552 is a module for generating the harvest processing schedule based on the harvest schedule information. The display control module 553 is a module that shows information about the harvest processing schedule on the communication terminal 320 in a farm house, or the like. The CPU 510 reads the information generation module 551, the scheduling module 552, and the display control module 55, stores the modules into an application execution area 547 of the RAM 540, and then executes the modules. A control program 554 is a program for controlling the entire processing in the information processing device 200.

The input/output interface 560 interfaces input/output data with an input/output device. The input/output interface 560 is connectable to a display unit 561 and an operation unit (operator) 562. Further, the input/output interface 560 may be connected to a storage medium 564. The input/output interface 560 may further be connected to a speaker 563, which is an audio output unit, a microphone, which is an audio input unit, or a GPS position determination unit. In the RAM 540 and the storage 550 illustrated in Fig. 5, programs or data on general-purpose functions or other feasible functions included in the information processing device 200 are not illustrated.

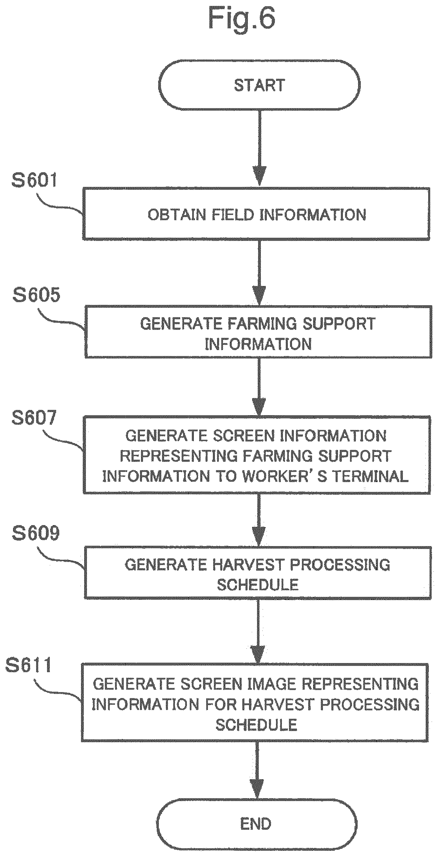

Fig. 6 is a flowchart illustrating a processing procedure in the information processing device 200 according to the present example embodiment. Processing is executed according to this flowchart, thereby achieving processing to be executed by the CPU 510 in Fig. 5 while using the RAM 540, processing in the functional configuration unit of the information processing device 200 illustrated in Fig. 3A, and the like.

In step S601, the information processing device 200 obtains field information including at least one of weather information, soil information, crop information, crop growth information, and farming history information.

In step S605, the information generation unit 301 in the information processing device 200 generates farming support information about a field based on the field information obtained in step S601. In step S607, the display control unit 303 in the information processing device 200 generates screen information indicating the farming support information generated in step S605 on the communication terminal 320 used by a worker of a field, or the terminal 330 in a farm house.

In step S609, the scheduling unit 302 of the information processing device 200 generates harvest processing schedule based on harvest schedule information included in the farming support information generated in step S605. In step S611, the display control unit 303 of the information processing device 200 generates the screen information indicating information about the harvest processing schedule on at least one of the communication terminal 320 used by a worker of a field, the terminal 330 in a farm house, the terminal 340 in a transportation company, the communication terminal 350 on a transport vehicle, and the terminal 360 in a process factory.

According to the present example embodiment, it is possible to improve efficiency of work from harvesting of a crop to collection and a process of the crop. The information generation unit 301 in the information processing device 200 generates the farming support information including harvest schedule information based on the field information. An operator in a farm house or a field performs farming based on the farming support information, and thereby, harvest timing and harvest volume included in the harvest schedule information can be satisfied. Further, the scheduling unit 302 in the information processing device 200 generates harvest processing schedule based on the harvest schedule information. The scheduling unit 302 calculates a total value of harvest volumes in each field for each term based on, for example, the harvest schedule information (illustrated in Fig. 4B), and, thereby, calculates, for each term, the harvest volume of a crop that is scheduled to be harvested in each field as the harvest schedule 441 (Fig. 4D) for the crop. Next, the scheduling unit 302 calculates an volume of a transport vehicle, the volume appropriate for transportation of the crop harvested in the field to a process factory, for example, for each term, and, thereby, generates the transportation schedule 441 (Fig. 4D) for the harvest. In this case, the scheduling unit 302 may determine a transport vehicle based on, for example, the processing ability of the process factory for each term. Next, the scheduling unit 302 generates the harvest processing schedule (Fig. 4D) in which the calculated harvest schedule 441 (Fig. 4D) for the crop, the transportation schedule 442 for the harvest, and the field ID 411 are associated with each other.

Each process factory arranges transport vehicles (e.g., trucks), arranges harvesters in advance based on the harvest processing schedule, and, thereby, improves the efficiency of crop harvest processing. In other words, the transport vehicles and the like can be arranged based on the harvest processing schedule generated in advance and the arrangements result in preventing occurrence of deterioration in utilization rate of a harvest and a waste of an operation status of each factory.

### [Third example embodiment]

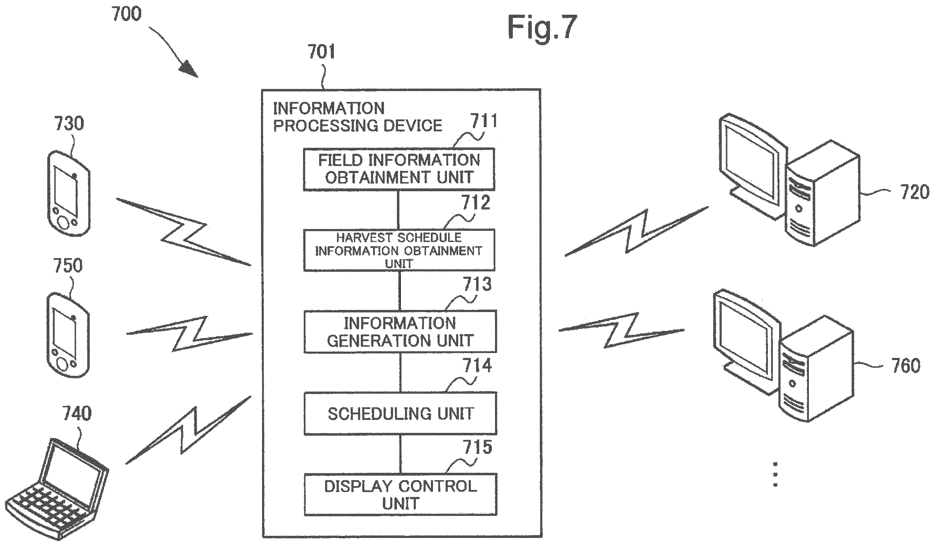

Next, an information processing system according to a third example embodiment of the present invention will be described with reference to Fig. 7. Fig. 7 is a diagram illustrating a configuration of an information processing system 700 according to the present example embodiment. The information processing system 700 includes an information processing device 701, a terminal 720 in a farm house, a communication terminal 730 used by an operator, a terminal 740 in a transportation company, a communication terminal 750 on a transport vehicle, and a terminal 760 in a process factory.

The information processing device 701 includes a field information obtainment unit (field information obtainer) 711, a harvest schedule information obtainment unit (harvest schedule information obtainer) 712, an information generation unit (information generator) 713, a scheduling unit (scheduler) 714, and a display control unit (display controller) 715.

The field information obtainment unit 711 obtains field information. The field information includes at least one of weather information, soil information, crop information, crop growth information, and farming history information. The weather information, the soil information, the crop information, the crop growth information, and the farming history information are similar to the information described in the first example embodiment. The field information obtainment unit 711 may obtain the field information from a database (DB) such as an external server, or may obtain the field information from a DB storing a storage unit (not illustrated) in the information processing device 701. Further, the field information obtainment unit 711 may obtain the field information from, for example, the terminal 720 in a farm house, or the like.

The harvest schedule information obtainment unit 712 generates harvest schedule information (hereinafter referred to as "second harvest schedule information") based on the harvest timing information and harvest volume information obtained from, for example, a process factory. The second harvest schedule information generated by the harvest schedule information obtainment unit 712 may be identical to the first harvest schedule information included in the farming support information generated by the information generation unit 713 to be described later. The harvest schedule information obtainment unit 712 can also generate harvest schedule information about a crop based on at least one of demand information about a crop, a crop price, and a cost used for farming processing. The crop price is a concept including any one of a purchase price for a crop, a market price for a crop, a consumer price for a crop, and a crop futures price. A demand for a predetermined crop may indicate, for example, a volume of raw material in a predetermined factory using the crop as the raw material when an operation rate or a processing volume per hour is to be maintained at a predetermined level. The demand information about a crop may indicate a demand for a predetermined crop at a predetermined time as a value. The demand information about a crop may be present individually for each subject for which a demand occurs, or may indicate the sum of demands for a predetermined crop in a plurality of subjects that have simultaneously occurred. The demand information about a crop is related to the crop price. For example, if the volume of the crop to be supplied to the market is increased even when the demand for the crop decreases, the market price for the crop decreases. If the volume of the crop to be supplied is decreased even when the demand for the crop increases, the market price for the crop increases. Further, the harvest schedule information obtainment unit 712 generates harvest schedule information indicating that the harvest volume of the crop is increased because it is estimated that, for example, a consumer demand for a certain seasonal crop may increase when the crop is in season. Furthermore, the harvest schedule information obtainment unit 712 generates harvest schedule information indicating that the harvest volume of the crop is decreased because it is estimated that a consumer demand for an out-of-season crop may decrease. Thus, the harvest schedule information obtainment unit 712 can generate harvest schedule information based on various factors, such as the factors described above or factors other than the factors described above.

The information generation unit 713 generates farming support information for a field based on the field information obtained by the field information obtainment unit 711 and the second harvest schedule information generated by the harvest schedule information obtainment unit 712. The information generation unit 713 generates farming support information that satisfies the second harvest schedule information based on, for example, the field information and the second harvest schedule information about a crop that can be grown in the field. The generated farming support information includes the first harvest schedule information. The first harvest schedule information corresponds to the harvest schedule information in the first example embodiment. A worker for a farm house or a field, or the like carries out farming based on the farming support information, and, thereby, can raise the crop consistent with the second harvest schedule information.

The scheduling unit 714 generates a harvest processing schedule based on the first harvest schedule information. For example, in accordance with the first harvest schedule information, when and how much a certain crop can be harvested can be recognized. Accordingly, a farm house or the like can arrange persons or machines required for harvesting a crop in advance. Further, each process factory can recognize when and how much a crop will be harvested. Accordingly, the process factory can reserve lines in the factory in advance, or can increase or decrease the number of workers based on the prediction of an operation status of each line. Therefore, the process factory can effectively execute processes for a crop.

The display control unit 715 generates screen information indicating the farming support information on the communication terminal 730 used by a worker of a field, or the terminal 720 in a farm house. Further, the display control unit 715 generates screen information indicating information about the harvest processing schedule on the terminal 720 in a farm house, the terminal 740 in a transportation company, the communication terminal 750 on a transport vehicle, or the terminal 760 in a process factory. Thus, a large number of persons who engage in farming can obtain, as needed, necessary information by themselves, and the information can be shared among the large number of persons, companies, and the like which engage in farming.

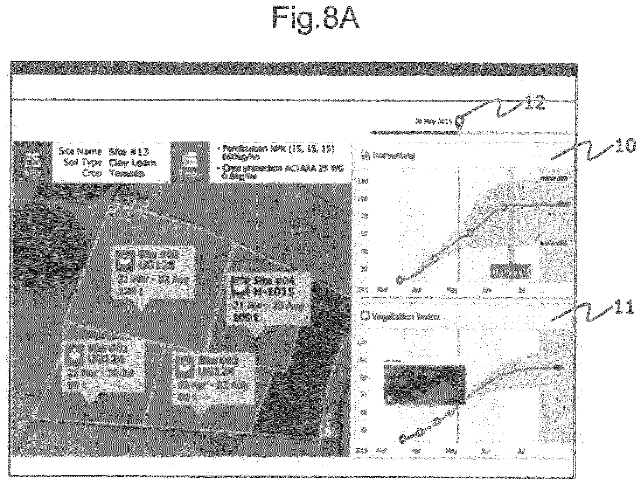

The screen (screen information) illustrated in Fig. 8A is shown on, for example, the terminal 720 in a farm house, or the terminal 760 in a process factory. As illustrated on a left side of Fig. 8A, information about each field (e.g., a location, harvest volume, planting date, and harvest date of each field) can be shown in such a manner that the information is superimposed on a satellite photograph of each field. A graph 10 in Fig. 8A is a graph illustrating a crop market price based on weather information. A graph 11 is a graph illustrating a crop growth status based on a vegetation index (Normalized Difference Vegetation Index). In the graph 10 and the graph 11, a graphic 12 is slid in a horizontal direction and, thereby, the slide changes a timeline value. When the timeline value is changed, the crop market price and the growth status also change based on a weather (meteorological) forecast. In other words, the information processing system 700 can support planning of a harvest schedule in association with a meteorological forecast.

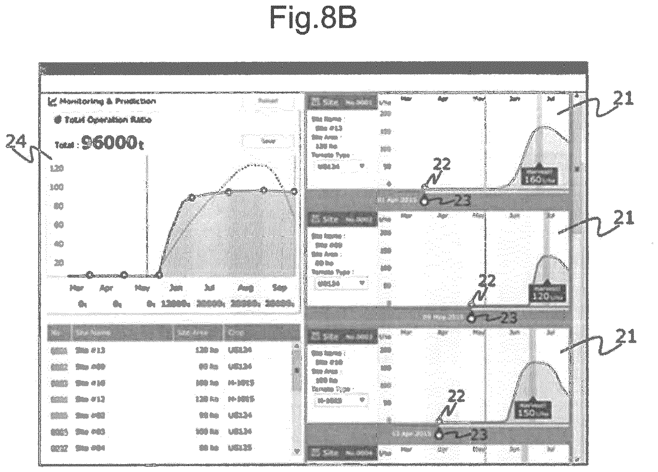

Fig. 8B is a diagram illustrating an example of a simulation screen for a planting schedule. The screen illustrated in Fig. 8B is shown on, for example, the terminal 760 in a process factory. A simulation of a planting schedule is carried out before planting by a farm house. When a process factory is under contract with a plurality of farm houses, adjustment of the planting date in each field leads to leveling the transportation volume of the harvest to be received by the process factory. Each graph 21 is a graph illustrating the prediction of a harvest volume for harvest timing in each field. A graphic 22 represents a planting date. As a graphic 23 is slid in the horizontal direction, the graphic 22 is slid in the horizontal direction. In each graph 21, when the graphic 23 is slid to change the planting date, the harvest volume at each timing changes depending on the change of the planting date. A graph 24 is a graph illustrating the accumulation of harvest volumes in each field at harvest timings. Specifically, a shape of the graph 24 changes depending on change of the harvest volume in each field varies. For example, a process factory generates a planting schedule in which the accumulated value of harvest volumes is equal to or less than a predetermined threshold and, thereby, can level the volume for receiving a harvest. The information generation unit 713 can generate the farming support information including information about the planting schedule date determined on the screen illustrated in Fig. 8B.

According to the present example embodiment, the information processing system 700 can support growth of a crop in a field, harvest processing in a process factory, and the like. According to the present example embodiment, the crop harvest processing can be effectively controlled together with the crop harvest timing and the harvest volume. For example, in each process factory, harvest schedule information in which the harvest timing and harvest volume in each farm house is adjusted in such a way that the volume of the harvest received by its own factory is set to a desired level is generated. For example, the harvest timing in each farm house is shifted, or the harvest volume is increased or decreased in the harvest schedule information in such a way that the volume of the harvest received in the process factory is levelled. The information generation unit 713 in the information processing system 700 generates farming support information based on the harvest schedule information and the field information. A worker in a farm house or a field performs farming based on the farming support information and, as a result, the harvest timing and harvest volume included in the harvest schedule information generated for the process factory can be satisfied. Further, the scheduling unit 714 in the information processing system 700 generates the harvest processing schedule based on the harvest schedule information. Each process factory arranges transport vehicles based on the harvest processing schedule and can level work for crop harvest processing. Leveling the work for crop harvest processing leads to preventing occurrence of deterioration in utilization rate of a harvest or a waste of an operation status of each factory.

### [Other example embodiments]

The claimed invention has been described so far with reference to the above-described example embodiments without limitation thereto. Various modifications that will be understood by those skilled in the art can be made to a configuration and details of the claimed invention within the scope thereof. In addition, any system or device combining different features included in the example embodiments in any manner is also included in the scope of the present invention,

Further, the present invention may be applied to a system constituted by a plurality of machines or may be applied to a single device. Furthermore, the present invention is applicable to a case where the control program that achieves the functions of the example embodiment is provided directly or remotely to a system or a device. Accordingly, in order to achieve the functions of the present invention by a computer, a program to be installed in the computer, a medium storing the program, and a world wide web (WWW) server providing the program for download are also included in the scope of the present invention. In particular, a non-transitory computer readable medium that at least stores a program for causing a computer to execute the processing steps included in the above-described

This application is based upon and claims the benefit of priority from Japanese patent application No. 2016-061458, filed on March 25, 2016, the disclosure of which is incorporated herein in its entirety.

## Claims

1. An information processing device comprising:
information generation means for generating first harvest schedule information for a crop based on field information including at least one of weather information, soil information, crop information, crop growth information and farming history information of a field, the first harvest schedule information including harvest timing information and harvest volume information; and
scheduling means for generating a harvest processing schedule including at least one of a harvest schedule for the field, a logistic schedule, and a process schedule based on the generated first harvest schedule information.

2. The information processing device according to claim 1, wherein
the information generation means generates farming support information associated with the field, wherein
the farming support information includes the first harvest schedule information.

3. The information processing device according to claim 2, wherein
the farming support information includes planting timing information, fertilization timing information, fertilizer volume information, irrigation timing information, and irrigation volume information.

4. The information processing device according to any one of claims 1 to 3 further comprising
display control means for generating information representing the harvest processing schedule or information representing the farming support information.

5. The information processing device according to any one of claims 1 to 4, wherein
the harvest processing information include at least one of harvest schedule representing a preparation schedule of a harvest device and human resource relating to the first harvest schedule information, vehicle allocation schedule of a transport vehicle for the first harvest schedule information and process-factory acceptable volume of a crop, and process schedule representing an operation schedule of the process factory for the first harvest schedule information.

6. The information processing device according to any one of claims 1 to 5 further comprising
harvest scheduling means for generating second harvest schedule information based on input or obtained harvest timing information and harvest volume information.

7. The information processing device according to claim 6, wherein
the harvest scheduling means generates the second harvest schedule information based on at least one of demand information of a crop and price of the crop.

8. The information processing device according to claim 6 or claim 7, wherein
the information generation means generates the farming support information based on the field information and the second harvest schedule information.

9. A control method by information processing apparatus, the control method comprising:
generating first harvest schedule information for a crop based on field information including at least one of weather information, soil information, crop information, crop growth information and farming history information of a field, the first harvest schedule information including harvest timing information and harvest volume information; and
generating a harvest processing schedule including at least one of a harvest schedule for the field, a logistic schedule, and a process schedule based on the generated first harvest schedule information.

10. A recoding medium storing a control program recorded therein, the program causing a computer to achieve:
an information generation function for generating first harvest schedule information for a crop based on field information including at least one of weather information, soil information, crop information, crop growth information and farming history information of a field, the first harvest schedule information including harvest timing information and harvest volume information; and
a scheduling function for generating a harvest processing schedule including at least one of a harvest schedule for the field, a logistic schedule, and a process schedule based on the generated first harvest schedule information.
